(19) Europäisches Patentamt
European Patent Office
Office européen des brevets

(11) **EP 3 203 756 A1**

(12) **EUROPEAN PATENT APPLICATION**

(43) Date of publication:
**09.08.2017 Bulletin 2017/32**

(51) Int Cl.:
**H04N 21/475** (2011.01)  **H04N 21/45** (2011.01)
**H04N 21/466** (2011.01)  **H04N 21/454** (2011.01)

(21) Application number: **16305106.3**

(22) Date of filing: **02.02.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Thomson Licensing**
**92130 Issy-les-Moulineaux (FR)**

(72) Inventors:
• **BAVEYE, Yoann**
**35576 Cesson-Sévigné (FR)**

• **CHAMARET, Christel**
**35576 Cesson-Sévigné (FR)**
• **DELLANDREA, Emmanuel**
**69134 Ecully Cedex (FR)**
• **CHEN, Liming**
**39134 Ecully Cedex (FR)**

(74) Representative: **Huchet, Anne et al**
**TECHNICOLOR**
**1-5, rue Jeanne d'Arc**
**92130 Issy-les-Moulineaux (FR)**

(54) **METHODS FOR DETERMINING A PERSONALIZED PROFILE AND FOR FILTERING EXCERPTS OF A MULTIMEDIA CONTENT, CORRESPONDING DEVICES, COMPUTER PROGRAM PRODUCT AND COMPUTER-READABLE CARRIER MEDIUM**

(57)     A first method, for determining a personalized profile related to an emotion, comprises: successive rendering of items of a set of items associated each with a level of compliance to the emotion and ordered according to the levels, until receiving, in response to the rendering of one of the items, a stop indicator; partitioning the set of items into a subset of acceptable items and a subset of rejected items according to the stop indicator; acquiring at least one ranking value for each rejected item; and determining the personalized profile according to the acquired ranking values. A second method, for filtering excerpts of a multimedia content, comprises: determining or receiving an emotional profile of the content; determining or receiving at least one personalized profile resulting from performing the first method; and filtering excerpts from the content, using the emotional profile and the at least one personalized profile.

Figure 1

**Description**

## 1. FIELD OF THE DISCLOSURE

The disclosed subject matter generally relates to the consumption of multimedia contents (notably audio and/or video contents) and more particularly to automatic filtering of (i.e. restricting access to) potentially objectionable excerpts (or portions) of those contents.

More specifically, the disclosure relates to a method (and corresponding device) for determining a personalized profile related to a particular emotion (notably but not exclusively anxiety), and also to a method (and corresponding device) for filtering objectionable excerpts of a multimedia content (notably but not exclusively worrisome/anxious scenes of a video content) as a function of the aforesaid personalized profile.

## 2. BACKGROUND

Some previous works dealing with the automatic detection of scenes to be removed in movies to protect children or more sensitive person typically relies on machine learning to infer the presence or absence of violence in a movie scene. See for example the following paper: "Affective video retrieval: Violence detection in Hollywood movies by large-scale segmental feature extraction" (EYBEN Florian, WENINGER Felix, LEHMENT Nicolas, et al, PloS one, 2013, vol. 8, no 12, p. e78506). However, such works are limited since the definition of violence is often subjectively defined in advance, by researchers designing the machine learning frameworks. Thus, there is no room for personalization.

It is also known from US Patent Application No. US20060130119 a system to replace (filter) objectionable content by non-objectionable content, black frames or advertisements. Objectionable content is defined based on parental control parameters, namely through three ratings: violence, language and sex ratings. However, these categories may not be enough to represent the variety of content one may want to avoid and is limited to parental control.

Furthermore, most previous works do not rely on psychological work to define violent or objectionable content.

Therefore there is a need to provide a new way to automatically remove objectionable scenes (the objectionable nature of which being function of a particular emotion, notably but not exclusively anxiety (particular case of worrisome/anxious scenes)) that a public (i.e. not only children) does not want to see.

## 3. SUMMARY

A particular aspect of the present disclosure relates to a method, to be performed by a first device comprising a user interface, for determining a personalized profile related to an emotion, said method comprising:

- successive rendering of items of a set of items associated each with a level of compliance to said emotion and ordered according to said levels, until receiving, in response to the rendering of one of said items, a stop indicator representative of an order of interrupting the rendering;
- partitioning said set of items into a subset of acceptable items and a subset of rejected items according to said stop indicator;
- acquiring at least one ranking value for each item of the subset of rejected items; and
- determining said personalized profile according to the acquired ranking values.

Thus, the proposed solution relies on a wholly novel and inventive approach to determine a personalized profile of a user related to a particular emotion, i.e. to collect and translate the acceptable level of a particular emotion for a user. Thanks to the successive rendering of items ordered according to their given levels of compliance to the particular emotion, the method is easy and intuitive for the user, and can be based on psychological rules. With the proposed method, there is no need for researchers to subjectively define in advance violence or parental control parameters (such as violence, language and sex ratings).

According to a particular feature, said particular emotion corresponds to at least one curve in a valence/arousal space.

Thus the proposed solution can be applied to many different particular emotions, each corresponding to at least one different curve in the valence/arousal space. The term "curve" is to be taken in a broad sense and also includes a straight line.

In a particular implementation, said emotion is anxiety.

According to a particular feature, the level of compliance associated with an item is computed from arousal and valence values associated with said item in said valence/arousal space.

Instead of using the concept of violence, we use the concept of valence (which ranges from negative to positive emotions) and arousal (which ranges from calm to arousing emotions) to precisely measure the level of anxiety. However these concepts of valence and arousal are not mentioned to the user, who merely watches the items and decides when must be sent the stop indicator.

According to a particular feature, the level of compliance associated with an item is computed according to the following equation: $AnxiousY = (V - 0.5)*\sin(-\pi/4) + (A - 0.5)*\cos(-\pi/4)$ where AnxiousY is the level of compliance expressed in an anxiety space, and V and A are the valence and arousal values associated with said item and ranging from 0 to 1.

Thus the given level of compliance associated with a given item is easy to compute.

In a first particular embodiment, said determining of said personalized profile comprises:

- assigning to each item of the subset of rejected items an emotional score which is function of the at least one ranking value of said item; and
- computing an emotional area, contained in the valence/arousal space, by interpolating the assigned emotional scores and the corresponding points in the valence/arousal space, said emotional area being defined by points associated with an emotional score resulting from the interpolation.

This first embodiment is also referred to as "2D embodiment" because in the emotional area all the points (of the valence/arousal space) sharing a same level of compliance ("AnxiousY") are not associated with a same emotional score.

According to a particular feature of the first embodiment, said at least one ranking value belongs to the group comprising a personalized ranking value and a default ranking value.

In a second particular embodiment, said acquiring of at least one ranking value comprises a personalized ranking, providing personalized ranking values, and a default ranking, providing default ranking values, and said determining of said personalized profile comprises:

- defining categories of rejected items by comparing the personalized and default ranking values, each category containing either one rejected item which ranking values are the same in the personalized and the default rankings, or several rejected items having consecutive default ranking values, the rejected items having the lowest and the highest of those consecutive default ranking values having a personalized ranking and a default ranking which are different;
- computing a level of compliance to said emotion, defined along said at least one curve, for a lowest border of each category;
- for each category, assigning to all the points of the valence/arousal space sharing the level of compliance associated with the lowest border of said category, an emotional score which is function of the default ranking value of the rejected item(s) of said category; and
- computing an emotional area, contained in the valence/arousal space, by interpolating the assigned emotional scores and the corresponding points in the valence/arousal space, said emotional area being defined by points associated with an emotional score resulting from the interpolation.

This second embodiment is also referred to as "1D embodiment" because in the emotional area all the points (of the valence/arousal space) sharing a same level of compliance ("AnxiousY") are associated with a same emotional score.

According to a particular feature, said set of items is a set of video and/or audio segments.

Thus the user who watches the items can easily decide when must be sent the stop indicator.

Another aspect of the present disclosure relates to a method, to be performed by a second device, for filtering excerpts of a multimedia content, comprising:

- determining or receiving an emotional profile of said multimedia content;
- determining or receiving at least one personalized profile resulting from performing the method according to any one of the claims 1 to 11; and
- filtering excerpts from the multimedia content, using the emotional profile and the at least one personalized profile.

This method for filtering excerpts of a multimedia content takes profit of the advantages associated with the method for determining a personalized profile (see above). In other words, and since it is carried out using the personalized profile, the filtering can be related to a particular emotion (notably but not exclusively anxiety), without need for researchers to subjectively define in advance this particular emotion. In the case of an audio content, the filtering may consist in an attenuation of the sound level of a audio segment.

According to a particular feature, said at least one personalized profile comprises an emotional area defined in the valence/arousal space, said emotional area being defined by points associated with an emotional score, in that said emotional profile associates each excerpt of the multimedia content with a point of the valence/arousal space, and

in that a particular excerpt of the multimedia content, if associated with a particular point of the valence/arousal space belonging to said emotional area, is filtered as a function of the emotional score associated with said particular point.

Thus the multimedia content can be finely filtered portion by portion (e.g. frame by frame).

According to a particular feature, the method comprises: determining or receiving at least two personalized profiles each resulting from performing the proposed method for a different user; and filtering excerpts from the multimedia content, using the emotional profile and said at least two personalized profiles.

Thus it is possible to combine personalized profiles from several audience members who intend to watch and/or listen to a filtered multimedia content together.

Another aspect of the present disclosure relates to a computer program product comprising program code instructions for implementing the method for determining a personalized profile (according to any one of the above embodiments) and/or the corresponding method for filtering (according to any one of the above embodiments), when said program is executed on a computer or a processor.

Another aspect of the present disclosure relates to a non-transitory computer-readable carrier medium storing the aforesaid computer program product.

Another aspect of the present disclosure relates to a first device comprising a user interface and configured for determining a personalized profile related to an emotion, said first device comprising a reprogrammable computation machine and/or a dedicated computation machine configured for:

- successive rendering of items of a set of items associated each with a level of compliance to said emotion and ordered according to said levels, until receiving, in response to the rendering of one of said items, a stop indicator;
- partitioning said set of items into a subset of acceptable items and a subset of rejected items according to said stop indicator;
- acquiring a ranking value for each item of the subsets of rejected items; and
- determining said personalized profile according to the acquired ranking values.

Advantageously, the reprogrammable computation machine and/or a dedicated computation machine of the first device is configured for implementing the method for determining a personalized profile as described above, in any of its various embodiments.

Another aspect of the present disclosure relates to a second device comprising a reprogrammable computation machine and/or a dedicated computation machine configured for:

- determining or receiving an emotional profile of said multimedia content;
- determining or receiving at least one personalized profile resulting from performing the method according to any one of the claims 1 to 11; and
- filtering excerpts from the multimedia content, using the emotional profile and the at least one personalized profile.

Advantageously, the reprogrammable computation machine and/or a dedicated computation machine of the second device is configured for implementing the method for filtering scenes as described above, in any of its various embodiments.

While not explicitly described, the present embodiments related the method for determining a personalized profile and/or the corresponding method for filtering or to the corresponding devices can be employed in any combination or sub-combination.

## 4. LIST OF FIGURES

Other features and advantages of embodiments shall appear from the following description, given by way of indicative and non-exhaustive examples and from the appended drawings, of which:

- Figure 1 is a block diagram of a system for filtering scenes according to a particular embodiment;
- Figure 2 is a discrete representation of emotions in the 2D valence/arousal space;
- Figure 3A is a flowchart of a method for filtering scenes according to a particular embodiment;
- Figure 3B is a flowchart of a first embodiment of step 33 of Figure 3A (method for determining a personalized profile);
- Figure 3C is a flowchart of a second embodiment of step 33 of Figure 3A (method for determining a personalized profile);
- Figure 4 is a screen capture of the user interface illustrating step 331 of Figure 3B (successive rendering of video segments);
- Figure 5 is a screen capture of the user interface illustrating step 333b of Figure 3B (personalized ranking of the rejected video segments);

- Figure 6 is a screen capture of the user interface illustrating filtering options;
- Figure 7 shows an example of emotional profile (valence and arousal curves, in the left part of Figure 7, and corresponding curve in the 2D valence/arousal space, in the right part of Figure 7) and a first example of personalized profile (in the 2D valence/arousal space, in the right part of Figure 7);
- Figure 8 shows the same example of emotional profile as in Figure 8, and a second example of personalized profile (in the 2D valence/arousal space, in the right part of Figure 8);
- Figure 9 is a flowchart of an alternative embodiment of a method for filtering scenes;
- Figure 10 shows the simplified structure of a first device configured for determining a personalized profile, according to a particular embodiment;
- Figure 11 shows the simplified structure of a second device configured for filtering scenes, according to a particular embodiment; and
- Figure 12 illustrates an example of a personalized profile (worrisome area) obtained by the execution of step 334' of Figure 3C.

## 5. DESCRIPTION OF EMBODIEMENTS

In all of the figures of the present document, similar elements and steps are designated by the same numerical reference sign.

In the following description, we consider the particular case of filtering worrisome scenes (also referred to as "anxious scenes") of a video content. The present disclosure is not limited to this particular case and can apply to filtering related to other particular emotion than anxiety. As detailed below, the proposed solution can be applied to many different particular emotions, each corresponding to at least one different curve (e.g. a different axis) in the valence/arousal space. The present disclosure can also apply to other kind of multimedia content, notably to excerpts of audio contents.

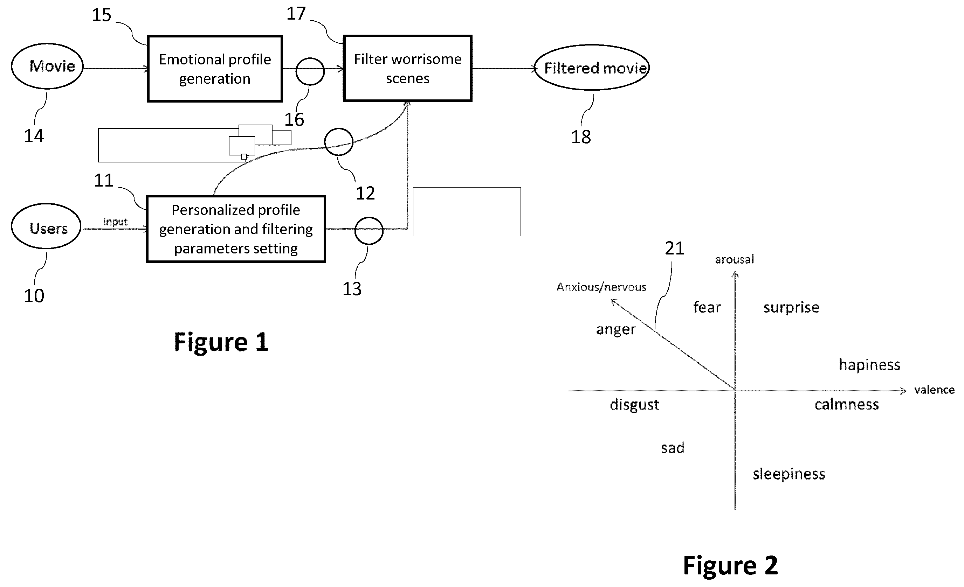

In the particular embodiment shown in **Figure 1,** the system for filtering worrisome scenes of a video content (e.g. a movie) comprises three core modules 15, 11 and 17. In a first implementation, each of them is comprised in a separate device. In a second implementation, all of them are comprised into the same device. In a third implementation, two of them are comprised into a first device and the third of them is comprised in a second device.

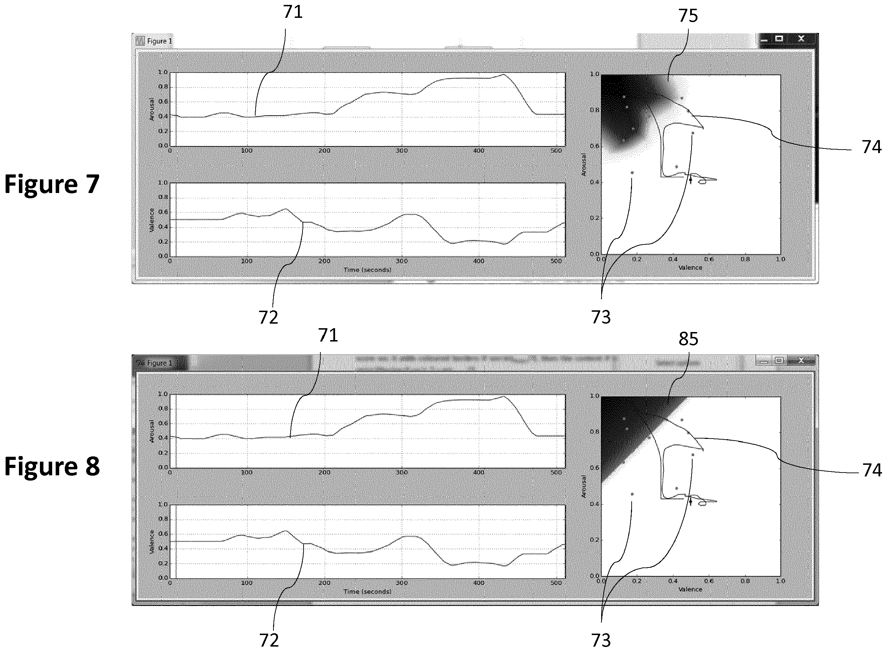

The module 15 is configured for generating an emotional profile 16 of the video content (movie) 14. The emotional profile 16 generated by the module 15 consists for example of a table containing valence and arousal values for each portion (e.g. each second or each frame) of the movie. As shown in the right part of **Figures 7 and 8,** the emotional profile can be illustrated as a curve 74 in the 2D valence/arousal space.

The emotional profile can be created automatically thanks to computational models that can predict affective values from the content of a movie, as disclosed for example in the following papers:

- A. Hanjalic and L.-Q. Xu, "Affective video content representation and modeling", IEEE Transactions on ultimedia, vol. 7, pp. 143-154, Feb. 2005; and
- N. Malandrakis, A. Potamianos, G. Evangelopoulos, and A. Zlatintsi, "A supervised approach to movie emotion tracking", in IEEE International Conference on Acoustics, Speech and Signal Processing (ICASSP), pp. 2376-2379, May 2011.

Returning to **Figure 1,** the module 11 comprises a user interface and is configured for generating a personalized profile 12 and setting filtering parameters 13, from inputs provided by a user 10 (or users) through a user interface comprised in the module 11. Using the user interface, the module 11 captures the current user's mood and which kind of content the user wants to hide. It is designed such that the anxiety concept is easy and intuitive for the users, and based on psychological rules. More precisely, the anxiety corresponds to a specific axis (also referred to as "anxiety line") 21 in the 2D valence/arousal space (see **Figure 2**) and the level of anxiety is measured along this specific axis.

In a particular embodiment, the module 11 aims at determining two pieces of information defining the personalized profile 12:

- the maximal level (threshold) on the anxiety line. To achieve this, several preselected examples (e.g. video segments), with ordered (e.g. increasing) anxiety levels are iteratively shown to the users. When the acceptable limit is reached for the user, he stops the process and this defines the maximal level (threshold) mentioned above, i.e. the "worrisome border" of a valence/arousal subspace (referred to as "worrisome area") containing points corresponding to data inducing anxious emotions to the user;
- the differentiation (i.e. perception) that the user can do between the fear and sad emotions. Regarding this point, it is possible that the internal mood status of a user (depression...) can distort his perception of anxiety and more globally his differentiation on the arousal axis (see Feldman, L. A. (1995), "Valence focus and carousal focus: Individual differences in the structure of affective experience", Journal of personality and social psychology, 69(1), 153). To determine this differentiation, at least one image (key frame) of each of the rejected examples (i.e. examples inside the user's worrisome area) is proposed to the user to get his ranking of the rejected examples, and then his perception of the worrisome area. Such ranking will help to refine the worrisome area of the current user.

Finally, each example is assigned with a worrisome score ws (also referred to as "emotional score"). In a particular embodiment, ws is equal to zero for each non-rejected example outside the user's worrisome area, and ws has a non-zero value for each rejected example inside the user's worrisome area, this non-zero value being function, for a given rejected example, of the ranking value of this given rejected example among all the rejected examples.

The personalized profile associates a worrisome score ws with at least one point of the worrisome area (in the 2D valence/arousal space). For example, the module 11 uses interpolation, from the worrisome scores ws of the examples, to predict the worrisome score ws associated with points of the worrisome area.

In the right part of each of **Figures 7 and 8,** a different personalized profile is illustrated in the 2D valence/arousal space: the worrisome area 75, 85 is located in the upper left quadrant (the higher the value of the worrisome score ws, the darker the color of the corresponding point, from light grey for the "worrisome border" to black for the upper left corner). The remaining area (i.e. the "non-worrisome area") is white, corresponding to points of the 2D valence/arousal space associated with a null worrisome score (ws=0). These examples of personalized profiles are described in more detail below. Grey dots 73 correspond to the examples shown to the user.

Returning to **Figure 1,** the module 17 is configured for filtering worrisome scenes of the video content, using the emotional profile 16 and the personalized profile 12, and according to the filtering parameters 13, so as to output a filtered video content (filtered movie) 18. More precisely, for each portion (e.g. each second or each frame) of the video content associated with a particular point which is located in the worrisome area, the filtering is function of the worrisome score ws associated with this particular point. Thus, it is possible to filter worrisome scenes from the video content, i.e. portions of the video content corresponding to points (of the 2D valence/arousal space) contained in the worrisome area 75, 85.

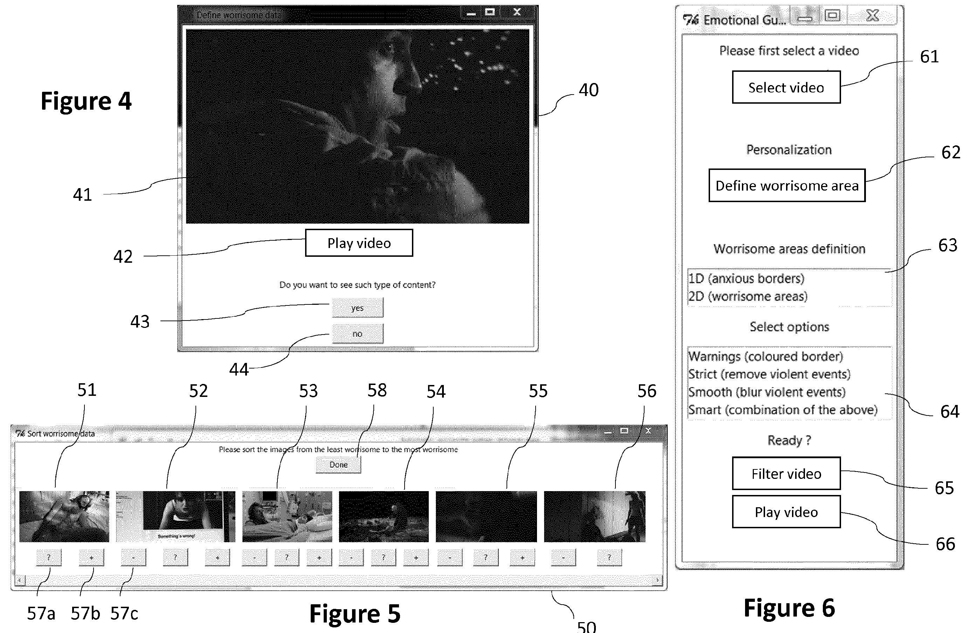

Several filtering scenarios are envisaged based on a configuration file or on user input, i.e. user's choice for filtering parameters 13 (see the selection field "Select options" 64 of Figure 6), for example:

- a warning mode: colored borders are added to the video frames to indicate the anxiety level that the current video scene will probably elicit to the viewers. The color of the border depends on the worrisome score ws assigned to this frame (e.g., white if not in the worrisome area and black it is assigned with the maximum worrisome score);
- a strict mode: each video frame inside the worrisome area 75, 85 is hidden (e.g. replaced by a black frame);
- a smooth mode: video frames inside the worrisome area 75, 85 are blurred, the blur intensity being proportional to the anxiety level. The size of the blur kernel depends on the worrisome score of the video frame. For example, a Gaussian blur is used with a kernel of size (s, s) with: $s = \left(1 - \dfrac{ws}{ws_{max}}\right) * 0.5 * \min(\text{width, height})$, with "width" and "height" the size of the frame; and
- a smart mode: several or all of the previous modes are combined, based on worrisome score ws. For example, a different filtering is applied for each frame inside the worrisome area 75, 85, based on its worrisome score ws: it superimposes colored borders if $0 < ws < ws_{max}/3$, blurs the content if $ws_{max}/3 \le ws < 2*ws_{max}/3$, and applies the strict filtering if $ws \ge 2*ws_{max}/3$.

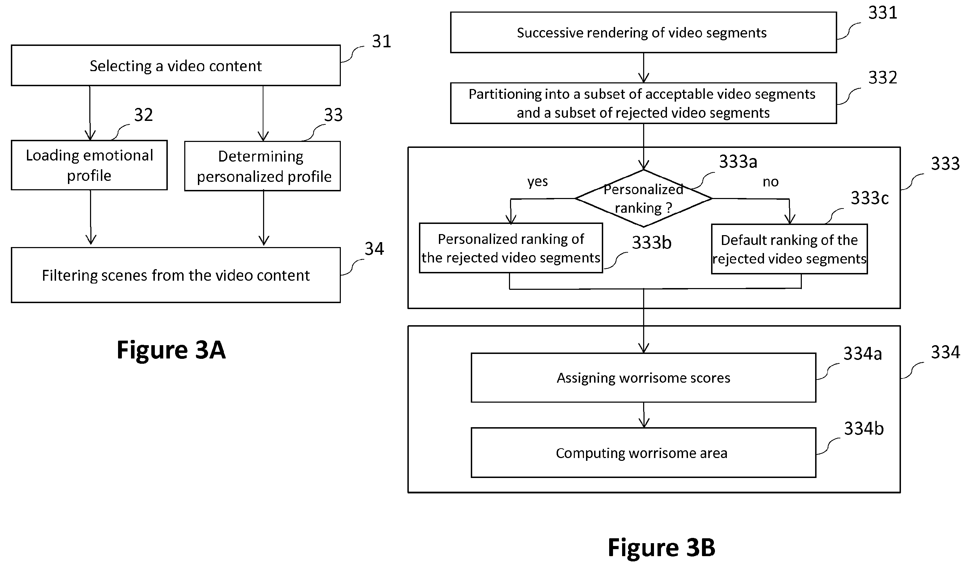

**Figure 3A** is a method for filtering scenes according to a particular embodiment. For example, this method is carried out by a first device comprising the modules 11 and 17. The first device is for example a website server providing a service to stream filtered movies. It can be also a set top box (STB) addressing connected home customers, when watching a movie from a VOD catalogue. It can be also an end-user terminal executing a mobile application.

In step 31, the user selects a video content (see button "Select video" 61 of **Figure 6**).

In step 32, the emotional profile of the video content is loaded, e.g. from a server which has previously computed it. This server comprises the module 15.

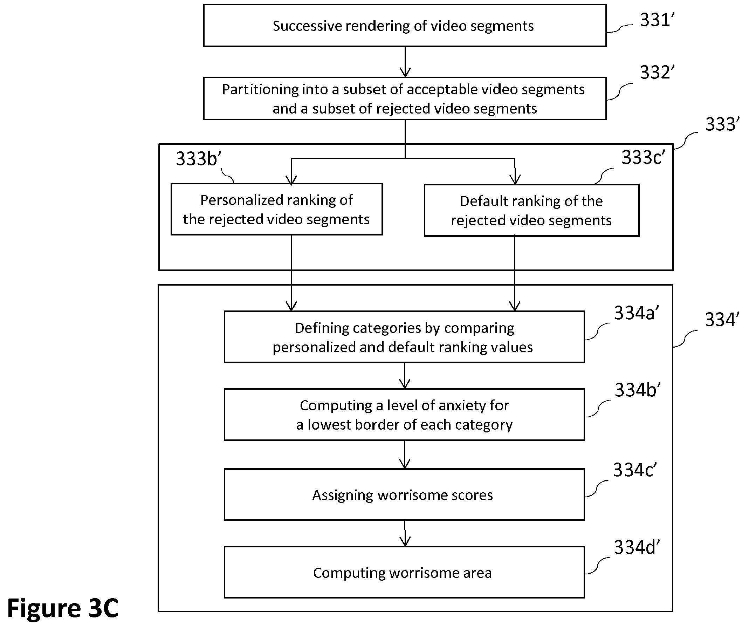

In step 33, the personalized profile is determined (by the module 11) (see button "Define worrisome area" 62 of **Figure 6**). Two embodiments of step 33 are described below (with **Figures 3B and 3C** respectively). In an alternative embodiment, step 33 is replaced by receiving a personalized profile determined by another device.

In step 34, the worrisome scenes of the video content are filtered (by the module 17), using the loaded emotional profile of the video content and the personalized profile of the user (see button "Filter video" 65 of **Figure 6**). The result (output) is a filtered video content that can be watched by the user (see button "Play" 66 of **Figure 6**). Several filtering scenarios are possible (see for example the different modes already described above: warning mode, strict mode, smooth mode and smart mode).

**Figure 3B** is a flowchart of a first embodiment of step 33 of **Figure 3A,** i.e. a flowchart of a method for determining the personalized profile. This first embodiment is executed if the user has chosen the item "2D (worrisome areas)" in the selection field "Worrisome areas definition" 63 of **Figure 6.** This method is carried out by the module 11 (which comprises a user interface) and is designed such that the concepts of valence and arousal are never mentioned to the user. The personalized profile associates a worrisome score ws with points of the worrisome area (in the 2D valence/arousal space), corresponding to data inducing anxious emotions to the user.

Several short video segments are previously selected, for which a representative key frame and induced valence and arousal values are available. This set of video segments, named S, should be distributed homogeneously in the 2D valence/arousal space. For example, a subset of eleven video segments is used (the eleven corresponding points in the 2D valence/arousal space are shown by grey dots 73 in **Figures 7 and 8**).

For each video segment, the corresponding pair of valence and arousal values has to be converted in a level of anxiety. In the literature, previous work has defined which area in the 2D valence/arousal space contains most of worrisome data. See for example the following paper: "KNUTSON Brian and GREER Stephanie M., "Anticipatory affect: neural correlates and consequences for choice ". Philosophical Transactions of the Royal Society of London B: Biological Sciences, 2008, vol. 363, no 1511, p. 3771-3786". This paper states that theorists have proposed a 45° rotation that yields dimensions of positive arousal (i.e. positive affective states involving high arousal, e.g. 'excitement') and negative arousal (i.e. negative affective states involving high arousal, e.g. 'anxiety').

Thus, in a particular embodiment, the equations to convert a point in the 2D valence/arousal space to a point in the anxiety space are:

$$AnxiousX = (V - 0.5)*cos(-\pi/4) - (A - 0.5)*.sin(-\pi/4)$$

$$AnxiousY = (V - 0.5)*sin(-\pi/4) + (A - 0.5)*.cos(-\pi/4)$$

where V and A are the valence and arousal values ranging from 0 to 1 and AnxiousX and AnxiousY (ranging from $-\sqrt{2}$ to $\sqrt{2}$) are the coordinate of the point in the anxiety space.

The level of anxiety elicited by a video segment associated to the valence and arousal values V and A is defined as AnxiousY.

In step 331, the module 11 carries out a successive rendering of video segments of the set S, associated each with a given level of anxiety (i.e. a given level of compliance to a particular emotion which is anxiety) and ordered according to these given levels, until receiving, in response to the rendering of a particular video segment, a stop indicator representative of an order of interrupting the rendering.

In step 332, the module 11 carries out a partitioning of the set S into a subset of acceptable video segments and a subset of rejected video segments, according to the stop indicator.

In a first implementation of steps 331 and 332, the video segments are shown to the user from the one having the lowest level of anxiety (i.e. the one inducing the least anxious emotions) to the one having the highest level of anxiety (i.e. the one inducing the most anxious emotions). **Figure 4** is a screen capture 40 of the user interface, illustrating this first implementation of step 331. For a given video segment, if the user clicks on a "Play video" button 42 (as illustrated by figure 4), then the given video segment is shown in a view window 41. The question asked to the user is for instance "Do you want to see such type of content?". If the user clicks on the "yes" button 43, the next video segment of the ordered set S (i.e. a video segment inducing a higher level of anxiety) is shown to the user. Else, i.e. if the user clicks on the "no" button 44, the step 331 is completed. In this case, the stop indicator is the "no" response (first response different from the previous ones). The subset of rejected video segments is formed of the particular video segment for which the user has answered "no" (thus the stop indicator is in this case a rejection indicator) and all video segments which are more worrisome than this particular video segment (and which have not been shown to the user).

In a second implementation of steps 331 and 332, the video segments are shown to the user from the one having the lowest level of anxiety to the one having the highest level of anxiety. The question asked to the user is for instance "Is it the most worrisome type of content you accept to see?". If the user clicks on the "no" button, the next video segment of the ordered set S (i.e. a video segment inducing a higher level of anxiety) is shown to the user. Else, i.e. if the user clicks on the "yes" button, the step 331 is completed. In this case, the stop indicator is the "yes" response (first response different from the previous ones). The subset of rejected video segments is formed of all video segments which are more worrisome than the particular video segment for which the user has answered "yes" (and which have not been shown to the user). The particular video segment for which the user has answered "yes" belongs to the subset of acceptable video segment (thus the stop indicator is in this case an acceptance indicator).

In a third implementation of steps 331 and 332, the video segments are shown to the user from the one having the highest level of anxiety to the one having the lowest level of anxiety. The question asked to the user is for instance "Do you want to see such type of content?". If the user clicks on the "no" button 44, the next video segment of the ordered set S (i.e. a video segment inducing a lower level of anxiety) is shown to the user. Else, i.e. if the user clicks on the "yes" button 43, the step 331 is completed. In this case, the stop indicator is the "yes" response (first response different from the previous ones). The subset of rejected video segments is formed of all video segments which are more worrisome than the particular video segment for which the user has answered "yes" (and which have been shown to the user). The particular video segment for which the user has answered "yes" belongs to the subset of acceptable video segment (thus the stop indicator is in this case an acceptance indicator).

In a fourth implementation of steps 331 and 332, the video segments are shown to the user from the one having the highest level of anxiety to the one having the lowest level of anxiety. The question asked to the user is for instance "Is it the most worrisome type of content you accept to see?". If the user clicks on the "no" button, the next video segment of the ordered set S (i.e. a video segment inducing a lower level of anxiety) is shown to the user. Else, i.e. if the user clicks on the "yes" button, the step 331 is completed. In this case, the stop indicator is the "yes" response (first response different from the previous ones). The subset of rejected video segments is formed of the particular video segment for which the user has answered "yes" (thus the stop indicator is in this case a rejection indicator) and all video segments which are more worrisome than this particular video segment (and which have been shown to the user).

In the four above examples of implementation of steps 331 and 332, for each video segment shown, the user can give either a response indicating a continuation (then the next video segment is shown), or a response which is a stop indicator. In an alternative embodiment, the user acts only once: the segments are read successively until the user provides the stop indicator (e.g. by pressing a "stop" button of the user interface).

In step 333, the module 11 acquires a ranking value for each video segment of the subset of rejected video segments.

All the acceptable video segments are excluded from the worrisome area since they are not considered as worrisome videos for the user. Therefore the worrisome score "0" is assigned to each acceptable video segment (ws = 0).

We detail now the sub-steps 333a, 333b and 333c of step 333.

In the sub-step 333a, the module 11 detects if the user has chosen a personalized or default ranking of the rejected video segments.

If the user has chosen the personalized ranking, the module 11 carries out the sub-step 333b in which it enables the user (through the user interface) to rank all the rejected video segments, e.g. from the one inducing the least anxious emotions (ranking value "1") to the one inducing the most anxious emotions (ranking value "n", with n the number of rejected video segments). When the user clicks on a button "Done" 58, the module 11 carries out the step 334 (see description below).

**Figure 5** is a screen capture 50 of the user interface, illustrating this sub-step 333b. In this example, we assume there are six rejected video segments, initially ordered by their levels of anxiety. For each of them, a key frame 51-56 is shown and three buttons are proposed to the user: a button "?" 57a, enabling the user to view the corresponding video segment; a button "+" 57b, enabling the user to give a higher ranking value to the rejected video segment (thus switching the corresponding key frame with the adjacent key frame corresponding to a rejected video segment with a higher ranking value); and a button "-" 57c, enabling the user to give a lower ranking value to the rejected video segment (thus switching the corresponding key frame with the adjacent key frame corresponding to a rejected video segment with a lower ranking value).

In another embodiment, the user interface can comprise, for each rejected video segment, a textual zone enabling the user to define a new position of the corresponding key frame (thus switching the corresponding key frame with the key frame which current position is the new position, or inserting the corresponding key frame at the new position and shifting consequently the key frames located after this new position).

If the user has chosen the default ranking, the module 11 carries out the sub-step 333c in which it uses a default ranking of all the rejected video segments (e.g. from the one inducing the least anxious emotions to the one inducing the most anxious emotions), based on their levels of anxiety (AnxiousY). The rejected video segment having the lowest level of anxiety is assigned with ranking value "1"; the one having the second lowest level of anxiety is assigned with the ranking value "2"; and so on till ranking value "n" (with n the number of rejected video segments).

In step 334, the module 11 determines the personalized profile according to the ranking values acquired in sub-step 333b or 333c.

We detail now the sub-steps 334a and 334b of step 334.

In the sub-step 334a, the module 11 assigns to each rejected video segment a worrisome score ws which is function of the ranking value of this rejected video segment. For example, the rejected video segment associated with ranking value "1" is assigned with the worrisome score "1"; the one associated with ranking value "2" is assigned with the worrisome score "2"; and so on. The maximum worrisome score $ws_{max}$ (i.e. the number n of rejected video segments the user had to rank: $ws_{max} = Card(x \in S | ws_x \neq 0)$) is assigned to the rejected video segment associated with the ranking value "n".

In the sub-step 334b, the module 11 computes a worrisome area, contained in the valence/arousal space, by interpolating (e.g. with a linear interpolation) the assigned worrisome scores ws and the corresponding points in the valence/arousal space. Thus, the worrisome area is defined by points associated with a worrisome score ws resulting from the interpolation. The emotional area 75 resulting from this interpolation is shown in the right part of **Figure 7.**

**Figure 3C** is a flowchart of a second embodiment of step 33 of **Figure 3A,** i.e. a flowchart of a method for determining the personalized profile. This second embodiment is executed if the user has chosen the item "1D (anxious borders)" in the selection field "Worrisome areas definition" 63 of **Figure 6.** This method is carried out by the module 11 (which comprises a user interface) and is designed such that the concepts of valence and arousal are never mentioned to the user. The personalized profile associates a worrisome score ws with at least one point of the worrisome area (in the 2D valence/arousal space), corresponding to data inducing anxious emotions to the user.

Steps 331' and 332' are identical to steps 331 and 332 of **Figure 3B.**

In step 333', the module 11 carries out a personalized ranking and a default ranking (in sub-steps 333b' and 333c' identical to steps 333b and 333c of **Figure 3B**), to acquire both a personalized ranking value and a default ranking value, for each rejected video segment.

In step 334', the module 11 determines the personalized profile according to the personalized and default ranking values acquired in step 333'.

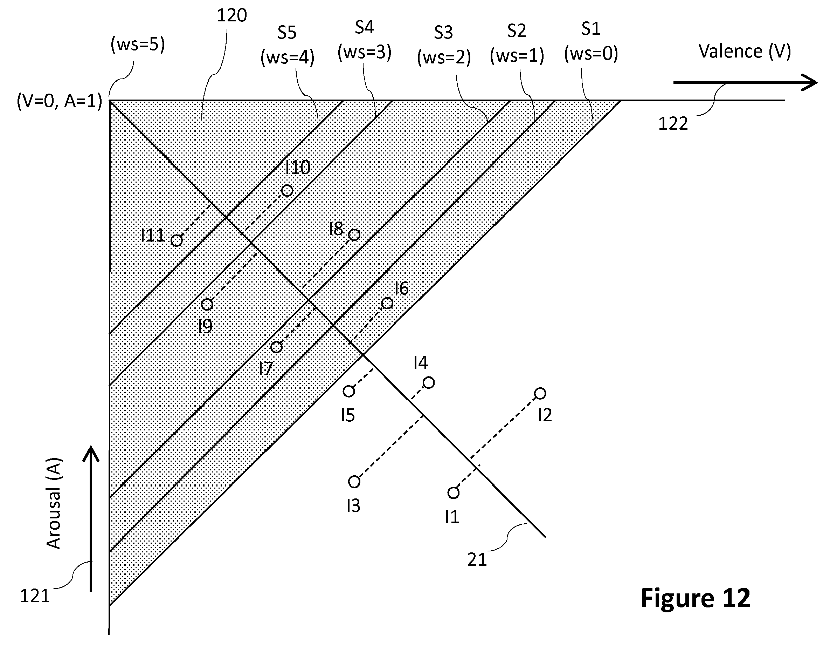

We detail now the sub-steps 334a' to 334d' of step 334', along with the illustrative example of **figure 12.** In this figure, arrows with reference signs 121 and 122 indicate the increasing directions for the arousal (A) and valence (V) values respectively.

In this example, as summarized in the first five columns of **Table A** below, we assume that:

- there are eleven video segments and the corresponding points in the valence/arousal space are noted I1 to I11 and are associated with increasing levels of anxiety (AnxiousY) noted L1 to L11;
- the video segments I1 to 15 are acceptable and the video segments 16 to I11 are rejected;
- the default (true) ranking of the rejected video segments is: 16, 17, 18, 19, 110, I11; and
- the personalized ranking of the rejected video segments is: I6, I7, I9, I8, I10, I11.

In the sub-step 334a', the module 11 defines categories of rejected video segments by comparing the personalized and default ranking values. Each category contains either one rejected video segment which is not switched between the personalized and default rankings, or several rejected video segments which are switched between the personalized and default rankings. In the aforesaid example, each of the rejected video segments 16, 17, I10 and I11 has identical personalized and default ranking values and is therefore is contained in a different category (named C1, C2, C4 and C5 respectively, see the sixth column of **Table A**). The rejected video segments 18 and 19 are switched between the personalized and default rankings, therefore they are contained in a same category (named C3, see the sixth column of **Table A**).

In the sub-step 334b', the module 11 computes a level of anxiety (AnxiousY), defined along the aforesaid specific axis (also referred to as "anxiety line") 21, for a lowest border of each category. In a particular implementation, the level of anxiety for the lowest border of a given category is the mean between the maximum level of anxiety of the video segment(s) in the given category and the maximum level of anxiety of the video segment(s) in the previous category. For the first category (i.e. containing the video segment having the lowest level of anxiety), the previous category is composed of the video segments that are not included in the worrisome area (the ones that are considered as viewable by the user). In the aforesaid example, for the first category C1, the previous category C0 is composed of the acceptable video segments I1 to I5. The seventh column of **Table A** gives the level of anxiety for the lowest border of categories C1 to C5.

In the sub-step 334c', for each category, the module 11 assigns to all the points of the valence/arousal space sharing the level of anxiety associated with the lowest border of this category (all these points are on a segment perpendicular to the anxiety line 21), a worrisome score which is function of the default ranking value of the rejected item(s) of this category. In the aforesaid example, for the category C1 (respectively C2, C3, C4 and C5), all the points sharing the level of anxiety associated with the lowest border of this category, are on a segment S1 (respectively S2, S3, S4 and S5) and the worrisome score assigned to them is "0" (respectively "1", "2", "3" and "4"). A maximum worrisome score (ws=5) is assigned to the point in the top left corner of the valence/arousal space (valence = 0, arousal = 1).

In the sub-step 334d', the module 11 computes a worrisome area, contained in the valence/arousal space, by interpolating (e.g. with a linear interpolation) the assigned worrisome scores ws and the corresponding points in the valence/arousal space. Thus, the worrisome area is defined by points associated with a worrisome score ws resulting from the interpolation. In the example of **Figure 12,** the worrisome area is the shaded area labeled with the reference sign 120. Another example of worrisome area, also obtained with the second embodiment of step 33, is shown and labeled with the reference sign 85 in the right part of **Figure 8.**

**Table A**

| Video segment | Initial Anxiety level | Rejected ? | Default ranking | Personalized ranking | Resulting Category | Anxiety level of the lowest border of the resulting category |
|---|---|---|---|---|---|---|
| I1 | L1 | No | - | - | C0 | - |
| I2 | L2 | No | - | - | | - |
| I3 | L3 | No | - | - | | - |
| I4 | L4 | No | - | - | | - |
| I5 | L5 | No | - | - | | - |
| I6 | L6 | Yes | 1 | 1 | C1 | (L6+L5)/2 |
| I7 | L7 | Yes | 2 | 2 | C2 | (L7+L6)/2 |
| 18 | L8 | Yes | 3 | 4 | C3 | (L9+L7)/2 |
| 19 | L9 | Yes | 4 | 3 | | |
| I10 | L10 | Yes | 5 | 5 | C4 | (L10+L9)/2 |
| I11 | L11 | Yes | 6 | 6 | C5 | (L11+L10)/2 |

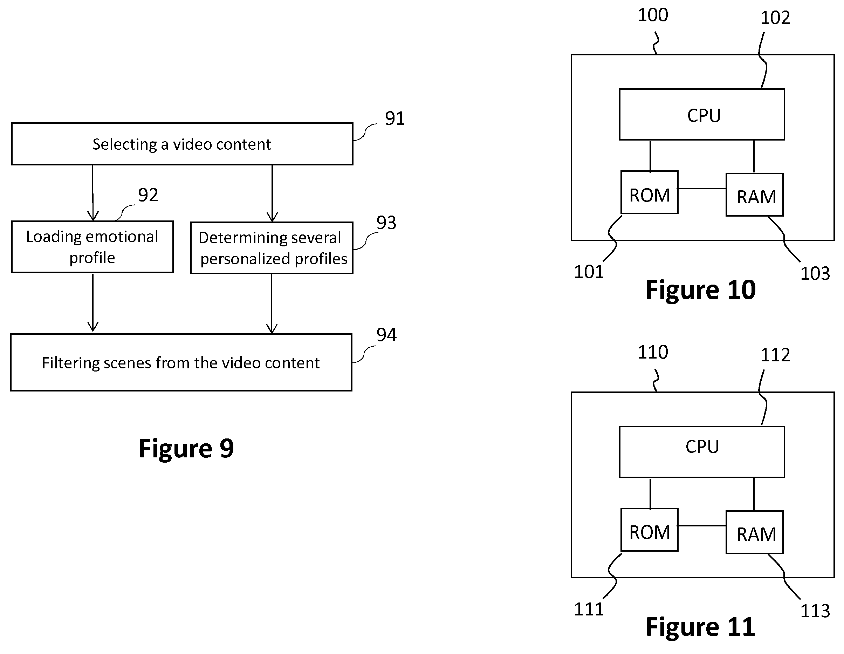

**Figure 9** is a flowchart of an alternative embodiment of a method for filtering scenes. This alternative embodiment makes possible to combine personalized profiles (worrisome areas) from several audience members watching a video content together.

Steps 91 and 92 are identical to steps 31 and 32 of **Figure 3A** (the user selects a video content and the emotional profile of the video content is loaded).

In step 93, a plurality of personalized profiles are determined, each resulting from performing the step 33 of **Figure 3A** for a particular user.

In step 94, the worrisome scenes of the video content are filtered, using the loaded emotional profile of the video content and the plurality of personalized profiles (instead of a single personalized profile in **Figure 3A**). As in the embodiment of **Figure 3A,** several filtering scenarios are possible (see for example the different modes already described above: warning mode, strict mode, smooth mode and smart mode).

In order to take into account the plurality of personalized profiles (each comprising a worrisome area), several solutions are possible. For example, for each portion (e.g. each second or each frame) of the video content associated with a particular point which is located in at least one of the plurality of worrisome areas, the filtering is function of the worrisome scores associated with this particular point in the plurality of worrisome areas (highest worrisome score, mean worrisome score, etc.).

**Figure 10** shows the simplified structure of a first device 100 configured for determining a personalized profile, according to a particular embodiment. In other words, this first device implements at least the module 11 of **Figure 1** and carries out at least the step 33 of **Figure 3A** (two embodiments of which are described above with **Figures 3B** and **3C**). The first device 100 comprises a non-volatile memory 101 (e.g. a read-only memory (ROM) or a hard disk), a volatile memory 103 (e.g. a random access memory or RAM) and a processor 102 (CPU). The non-volatile memory 101 is a non-transitory computer-readable carrier medium. It stores executable program code instructions, which are executed by the processor 102 in order to enable implementation of the method (described above) for determining the personalized profile. Upon initialization, the aforementioned program code instructions are transferred from the non-volatile memory 101 to the volatile memory 103 so as to be executed by the processor 102. The volatile memory 101 likewise includes registers for storing the variables and parameters required for this execution.

**Figure 11** shows the simplified structure of a second device 110 configured for filtering scenes of a video content, according to a particular embodiment. In other words, this second device implements at least the module 17 of **Figure 1** and carries out at least the step 34 of **Figure 3A.** The second device 110 comprises a non-volatile memory 111 (e.g. a read-only memory (ROM) or a hard disk), a volatile memory 113 (e.g. a random access memory or RAM) and a processor 112 (CPU). The non-volatile memory 111 is a non-transitory computer-readable carrier medium. It stores executable program code instructions, which are executed by the processor 112 in order to enable implementation of the method (described above) for filtering scenes of video content. Upon initialization, the aforementioned program code instructions are transferred from the non-volatile memory 111 to the volatile memory 113 so as to be executed by the processor 112. The volatile memory 111 likewise includes registers for storing the variables and parameters required for this execution.

All the steps of the above method for determining the personalized profile and the above method for filtering scenes of a video content can be implemented equally well:

- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a floppy disk, a CD-ROM or a DVD-ROM) or non-detachable; or
- by a dedicated machine or component, such as an FPGA (Field Programmable Gate Array), an ASIC (Application-Specific Integrated Circuit) or any dedicated hardware component.

The disclosure is not limited to a purely software-based implementation, in the form of computer program instructions, but that it can also be implemented in hardware form or any form combining a hardware portion and a software portion.

In other words, as will be appreciated by one skilled in the art, aspects of the present principles can be embodied as a system, method or computer readable medium. Accordingly, aspects of the present principles can take the form of an entirely hardware embodiment, an entirely software embodiment (including firmware, resident software, micro-code, and so forth), or an embodiment combining software and hardware aspects that can all generally be referred to herein as a "circuit," "module", or "system." Furthermore, aspects of the present principles can take the form of a computer readable storage medium. Any combination of one or more computer readable storage medium(s) may be utilized.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a random access memory (RAM); a read-only memory (ROM); an erasable programmable read-only memory (EPROM or Flash memory); a portable compact disc read-only memory (CD-ROM); an optical storage device; a magnetic storage device; or any suitable combination of the foregoing.

It will be appreciated by those skilled in the art that the block diagrams presented herein represent conceptual views of illustrative system components and/or circuitry embodying the principles of the disclosure. Similarly, it will be appreciated that any flow charts, flow diagrams, state transition diagrams, pseudo-code, and the like represent various processes which may be substantially represented in computer readable storage media and so executed by a computer or processor, whether or not such computer or processor is explicitly shown.

Although the present disclosure has been described with reference to one or more examples, workers skilled in the art will recognize that changes may be made in form and detail without departing from the scope of the disclosure and/or the appended claims.

**Claims**

1. Method, to be performed by a first device (100) comprising a user interface, for determining a personalized profile related to an emotion, said method comprising:

   - successive rendering (331, 331') of items of a set of items associated each with a level of compliance to said emotion and ordered according to said levels, until receiving, in response to the rendering of one of said items, a stop indicator representative of an order of interrupting the rendering;
   - partitioning (332, 332') said set of items into a subset of acceptable items and a subset of rejected items according to said stop indicator;
   - acquiring (333, 333') at least one ranking value for each item of the subset of rejected items; and
   - determining (334, 334') said personalized profile according to the acquired ranking values.

2. Method according to claim 1, **characterized in that** said particular emotion corresponds to at least one curve (21) in a valence/arousal space.

3. Method according to claim 2, **characterized in that** said emotion is anxiety.

4. Method according to claim 2 or 3, **characterized in that** the level of compliance associated with an item is computed from arousal and valence values associated with said item in said valence/arousal space.

5. Method according to claims 3 and 4, **characterized in that** the level of compliance associated with an item is computed according to the following equation: AnxiousY = (V - 0.5)*sin(-π/4) + (A - 0.5)*cos(-π/4), where AnxiousY is the level of compliance expressed in an anxiety space, and V and A are the valence and arousal values associated with said item and ranging from 0 to 1.

6. Method according to any one of the claims 2 to 5, **characterized in that** said determining of said personalized profile comprises:

   - assigning (334a) to each item of the subset of rejected items an emotional score which is function of the at least one ranking value of said item; and
   - computing (334b) an emotional area, contained in the valence/arousal space, by interpolating the assigned emotional scores and the corresponding points in the valence/arousal space, said emotional area being defined by points associated with an emotional score resulting from the interpolation.

7. Method according to claim 6, **characterized in that** said at least one ranking value belongs to the group comprising a personalized ranking value and a default ranking value.

8. Method according to any one of the claims 2 to 5, **characterized in that** said acquiring of at least one ranking value comprises a personalized ranking (333b'), providing personalized ranking values, and a default ranking (333c'), providing default ranking values, and **in that** said determining of said personalized profile comprises:

   - defining (334a') categories of rejected items by comparing the personalized and default ranking values, each category containing either one rejected item which ranking values are the same in the personalized and the default rankings, or several rejected items having consecutive default ranking values, the rejected items having the lowest and the highest of those consecutive default ranking values having a personalized ranking and a default ranking which are different;
   - computing (334b') a level of compliance to said emotion, defined along said at least one curve, for a lowest border of each category;
   - for each category, assigning (334c') to all the points of the valence/arousal space sharing the level of compliance associated with the lowest border of said category, an emotional score which is function of the default ranking value of the rejected item(s) of said category; and
   - computing (334d') an emotional area, contained in the valence/arousal space, by interpolating the assigned emotional scores and the corresponding points in the valence/arousal space, said emotional area being defined by points associated with an emotional score resulting from the interpolation.

9. Method according to any one of the claims 1 to 8, **characterized in that** said set of items is a set of video and/or audio segments.

10. Method, to be performed by a second device (110), for filtering excerpts of a multimedia content, comprising:

    - determining or receiving (32) an emotional profile of said multimedia content;
    - determining or receiving (33) at least one personalized profile resulting from performing the method according to any one of the claims 1 to 9; and
    - filtering (34) excerpts from the multimedia content, using the emotional profile and the at least one personalized profile.

11. Method according to claim 10, **characterized in that** said at least one personalized profile comprises an emotional area (75, 85) defined in the valence/arousal space, said emotional area being defined by points associated with an emotional score, **in that** said emotional profile associates each excerpt of the multimedia content with a point of the valence/arousal space, and **in that** a particular excerpt of the multimedia content, if associated with a particular point of the valence/arousal space belonging to said emotional area, is filtered as a function of the emotional score associated with said particular point.

**12.** Computer program product, **characterized in that** it comprises program code instructions for implementing the method according to any one of the claims 1 to 9 and/or the method according to any one of the claims 10 to 11, when said program is executed on a computer or a processor.

**13.** Non-transitory computer-readable carrier medium storing a computer program product according to claim 12.

**14.** First device (100) comprising a user interface and configured for determining a personalized profile related to an emotion, **characterized in that** it comprises a reprogrammable computation machine (102) and/or a dedicated computation machine configured for:

- successive rendering of items of a set of items associated each with a level of compliance to said emotion and ordered according to said levels, until receiving, in response to the rendering of one of said items, a stop indicator representative of an order of interrupting the rendering;
- partitioning said set of items into a subset of acceptable items and a subset of rejected items according to said stop indicator;
- acquiring a ranking value for each item of the subsets of rejected items; and
- determining said personalized profile according to the acquired ranking values.

**15.** Second device (110) configured for filtering excerpts of a multimedia content, **characterized in that** it comprises a reprogrammable computation machine (112) and/or a dedicated computation machine configured for:

- determining or receiving an emotional profile of said multimedia content;
- determining or receiving at least one personalized profile resulting from performing the method according to any one of the claims 1 to 9; and
- filtering excerpts from the multimedia content, using the emotional profile and the at least one personalized profile.

EP 3 203 756 A1

15  17

Movie → Emotional profile generation → ○ → Filter worrisome scenes → Filtered movie

14  16  18

Users → input → Personalized profile generation and filtering parameters setting

11

12

13

10

**Figure 1**

21

arousal

Anxious/nervous

fear    surprise

anger

hapiness

valence

disgust    calmness

sad

sleepiness

**Figure 2**

EP 3 203 756 A1

## Figure 3A

| Selecting a video content | 31 |

| Loading emotional profile | 32 |  | Determining personalized profile | 33 |

| Filtering scenes from the video content | 34 |

**Figure 3A**

## Figure 3B

| Successive rendering of video segments | 331 |

| Partitioning into a subset of acceptable video segments and a subset of rejected video segments | 332 |

333

Personalized ranking ? — 333a

yes → Personalized ranking of the rejected video segments — 333b

no → Default ranking of the rejected video segments — 333c

334

Assigning worrisome scores — 334a

Computing worrisome area — 334b

**Figure 3B**

331'

Successive rendering of video segments

332'

Partitioning into a subset of acceptable video segments and a subset of rejected video segments

333'

333b'

Personalized ranking of the rejected video segments

333c'

Default ranking of the rejected video segments

334'

334a'

Defining categories by comparing personalized and default ranking values

334b'

Computing a level of anxiety for a lowest border of each category

334c'

Assigning worrisome scores

334d'

Computing worrisome area

**Figure 3C**

**Figure 4**

40

41

Define worrisome data

Play video

Do you want to see such type of content?

yes

no

42

43

44

**Figure 5**

Sort worrisome data

Please sort the images from the least worrisome to the most worrisome

Done

Something's wrong!

51  52  53  58  54  55  56

57a  57b  57c

50

?  +  -  ?  +  -  ?  +  -  ?  +  -  ?  +  -  ?

**Figure 6**

Emotional Gu...

Please first select a video

Select video

61

Personalization

Define worrisome area

62

Worrisome areas definition

1D (anxious borders)
2D (worrisome areas)

63

Select options

Warnings (coloured border)
Strict (remove violent events)
Smooth (blur violent events)
Smart (combination of the above)

64

Ready ?

Filter video

65

Play video

66

EP 3 203 756 A1

17

**Figure 7**

**Figure 8**

EP 3 203 756 A1

## Figure 9

```
┌─────────────────────────────────────┐
│      Selecting a video content       │ ⟍ 91
└─────────────────────────────────────┘
        │                    │
        ▼ ⟍ 92               ▼ ⟍ 93
┌──────────────┐    ┌──────────────────┐
│ Loading      │    │ Determining      │
│ emotional    │    │ several          │
│ profile      │    │ personalized     │
│              │    │ profiles         │
└──────────────┘    └──────────────────┘
        │                    │
        ▼                    ▼
┌─────────────────────────────────────┐
│ Filtering scenes from the video     │ ⟍ 94
│ content                             │
└─────────────────────────────────────┘
```

**Figure 9**

## Figure 10

100    102

```
┌──────────────────────────────┐
│        ┌──────────┐          │
│        │   CPU    │          │
│        └──────────┘          │
│         │        │           │
│     ┌─────┐    ┌─────┐       │
│     │ ROM │────│ RAM │       │
│     └─────┘    └─────┘       │
└──────────────────────────────┘
```

101                    103

**Figure 10**

## Figure 11

110    112

```
┌──────────────────────────────┐
│        ┌──────────┐          │
│        │   CPU    │          │
│        └──────────┘          │
│         │        │           │
│     ┌─────┐    ┌─────┐       │
│     │ ROM │────│ RAM │       │
│     └─────┘    └─────┘       │
└──────────────────────────────┘
```

111                    113

**Figure 11**

**Figure 12**

Europäisches
Patentamt

European
Patent Office

Office européen
des brevets

**EUROPEAN SEARCH REPORT**

Application Number

EP 16 30 5106

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 02/37850 A2 (KONINKL PHILIPS ELECTRONICS NV [NL]) 10 May 2002 (2002-05-10) | 1,9,10, 12-15 | INV. H04N21/475 H04N21/45 H04N21/466 H04N21/454 |
| Y | * abstract * * page 2, paragraph 4 - page 3, paragraph 4 * * page 4, first paragraph of "Detailed description" * * page 5, paragraph 2 * * page 5, paragraph 5 * * page 9, line 9 - page 11, line 27 * * figure 6 * ----- | 2-4 | |
| Y,D | HANJALIC A ET AL: "Affective Video Content Representation and Modeling", IEEE TRANSACTIONS ON MULTIMEDIA, IEEE SERVICE CENTER, PISCATAWAY, NJ, US, vol. 7, no. 1, 1 February 2005 (2005-02-01), pages 143-154, XP011125470, ISSN: 1520-9210, DOI: 10.1109/TMM.2004.840618 * abstract * * section IV; figures 3,4 * ----- | 2-4 | TECHNICAL FIELDS SEARCHED (IPC) H04N |
| X | US 2003/066067 A1 (GUTTA SRINIVAS [US] ET AL) 3 April 2003 (2003-04-03) * [0052]-[0055] * ----- | 1,9,10, 12-15 | |
| A | EP 2 207 348 A2 (AXEL SPRINGER DIGITAL TV GUIDE [DE]) 14 July 2010 (2010-07-14) * [0005], [0039], [0040], [0044] * ----- | 1-15 | |
| A | WO 2012/153320 A2 (MALAVIYA RAKESH [IN]) 15 November 2012 (2012-11-15) * page 1, line 26 - page 3, line 13 * ----- | 1-15 | |
| | -/-- | | |

The present search report has been drawn up for all claims

| Place of search | Date of completion of the search | Examiner |
|---|---|---|
| The Hague | 2 August 2016 | La, Valérie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

EP 16 30 5106

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 01/99416 A2 (BELLSOUTH INTELLECT PTY CORP [US]; DURDEN GEORGE A [US]; STEFANIK JOHN) 27 December 2001 (2001-12-27) <br> * page 3, line 2 - line 27 * <br> * page 12, line 6 - line 11 * <br> ----- | 1-15 | |

TECHNICAL FIELDS
SEARCHED      (IPC)

The present search report has been drawn up for all claims

| Place of search | Date of completion of the search | Examiner |
|---|---|---|
| The Hague | 2 August 2016 | La, Valérie |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 30 5106

This annex lists the patent family members relating to the patent documents cited in the above-mentioned European search report.
The members are as contained in the European Patent Office EDP file on
The European Patent Office is in no way liable for these particulars which are merely given for the purpose of information.

02-08-2016

| Patent document cited in search report | | | Publication date | Patent family member(s) | | | Publication date |
|---|---|---|---|---|---|---|---|
| WO 0237850 | | A2 | 10-05-2002 | CN | 1406439 | A | 26-03-2003 |
| | | | | EP | 1332619 | A2 | 06-08-2003 |
| | | | | JP | 2004513576 | A | 30-04-2004 |
| | | | | WO | 0237850 | A2 | 10-05-2002 |
| US 2003066067 | | A1 | 03-04-2003 | CN | 1739106 | A | 22-02-2006 |
| | | | | EP | 1433083 | A2 | 30-06-2004 |
| | | | | JP | 2005504399 | A | 10-02-2005 |
| | | | | KR | 20040041630 | A | 17-05-2004 |
| | | | | US | 2003066067 | A1 | 03-04-2003 |
| | | | | WO | 03030027 | A2 | 10-04-2003 |
| EP 2207348 | | A2 | 14-07-2010 | NONE | | | |
| WO 2012153320 | | A2 | 15-11-2012 | US | 2012290508 | A1 | 15-11-2012 |
| | | | | WO | 2012153320 | A2 | 15-11-2012 |
| WO 0199416 | | A2 | 27-12-2001 | AU | 6346401 | A | 02-01-2002 |
| | | | | CA | 2413779 | A1 | 27-12-2001 |
| | | | | EP | 1461943 | A2 | 29-09-2004 |
| | | | | WO | 0199416 | A2 | 27-12-2001 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060130119 A

**Non-patent literature cited in the description**

- **EYBEN FLORIAN ; WENINGER FELIX ; LEHMENT NICOLAS et al.** Affective video retrieval: Violence detection in Hollywood movies by large-scale segmental feature extraction. *PloS one,* 2013, vol. 8 (12), e78506
- **A. HANJALIC ; L.-Q. XU.** Affective video content representation and modeling. *IEEE Transactions on ultimedia,* February 2005, vol. 7, 143-154
- **N. MALANDRAKIS ; A. POTAMIANOS ; G. EVANGELOPOULOS ; A. ZLATINTSI.** A supervised approach to movie emotion tracking. *IEEE International Conference on Acoustics, Speech and Signal Processing (ICASSP),* May 2011, 2376-2379
- **FELDMAN, L. A.** Valence focus and carousal focus: Individual differences in the structure of affective experience. *Journal of personality and social psychology,* 1995, vol. 69 (1), 153
- **KNUTSON BRIAN ; GREER STEPHANIE M.** Anticipatory affect: neural correlates and consequences for choice. *Philosophical Transactions of the Royal Society of London B: Biological Sciences,* 2008, vol. 363 (1511), 3771-3786